# FASCICULE DE BREVET EUROPEEN

(11) **EP 2 850 298 B1**
(45) Date de publication et mention de la délivrance du brevet: **19.10.2016**
(21) Numéro de dépôt: 13728439.4
(22) Date de dépôt: 07.05.2013
(51) Int. Cl.: F16K 11/085, F02B 29/04

(54) **VANNE POUR COMMANDER LA CIRCULATION DE FLUIDE, A MOYEN D'OBTURATION ROTATIF**
VENTIL ZUM STEUERUNG EINES FLÜSSIGKEITSSTROMS MIT EINER DREHVERSCHLUSSVORRICHTUNG
VALVE FOR CONTROLLING A FLOW OF FLUID, INCLUDING A ROTARY CLOSURE MEANS

(30) Priorité: 15.05.2012 FR 1254433
(43) Date de publication de la demande: 25.03.2015
(73) Titulaire: Valeo Systèmes De Contrôle Moteur, 95800 Cergy St Christophe (FR)
(72) Inventeur: LALLEMANT, Mathieu, F-78600 Maisons-Laffitte (FR); GIRARDON, Franck, F-78700 Conflans Sainte Honorine (FR); LEBRASSEUR, Patrick, F-60240 Montagny en Vexin (FR)
(74) Mandataire: Garcia, Christine
(86) Numéro de dépôt international: PCT/FR2013/051017
(87) Numéro de publication internationale: WO 2013/171409

(56) Documents cités:
- EP-A2- 0 283 240
- WO-A1-03/098026
- WO-A1-2008/116789
- CH-A5- 583 393
- DE-A1- 19 860 637
- FR-A- 1 552 332
- FR-A1- 2 241 734
- FR-A1- 2 519 401
- FR-A1- 2 920 853
- US-A- 3 471 021

## Description

La présente invention concerne une vanne de circulation de fluide, du type à moyen d'obturation rotatif, destinée plus particulièrement quoique non exclusivement à équiper les systèmes de circulation de fluide associés aux moteurs à combustion interne, qu'ils soient à essence ou Diesel, de véhicules, notamment de véhicules automobiles.

De telles vannes peuvent avoir des fonctionnalités diverses et, par exemple, quand elles sont prévues sur les moteurs Diesel à turbocompresseur, elles peuvent être utilisées pour doser la quantité d'air amenée dans la ligne d'admission du moteur, ou pour dériver une partie des gaz d'échappement circulant dans la ligne d'échappement et l'envoyer en direction de la ligne d'admission, notamment à des fins de traitement des oxydes d'azote. Les vannes selon l'invention concernent ainsi, en particulier, les vannes permettant la circulation de gaz.

Il est connu en la matière des vannes comportant un corps apte à être traversé par ledit fluide, et un moyen d'obturation commandable, disposé dans ledit corps et pouvant occuper, par rotation de celui-ci par rapport au corps, différentes positions fonctionnelles entre deux positions limites, respectivement fermée pour laquelle la circulation du fluide est interrompue, et ouverte pour laquelle la circulation du fluide est maximale.

Le moyen d'obturation est usuellement un volet en périphérie duquel est ménagé un biseau, et qui est monté solidaire sur un axe situé dans le plan du volet et pouvant être commandé en rotation pour faire tourner le volet. Ainsi, en position fermée, le volet est perpendiculaire à la circulation du fluide avec la tranche du biseau s'appliquant avec étanchéité contre la paroi d'un conduit du corps en obturant la circulation du fluide à travers la vanne. En revanche, par suite de la rotation commandée de 90° de l'axe dans le seul sens possible imposé par le biseau en appui contre la paroi, le volet s'efface et autorise la circulation du fluide en se trouvant parallèle au conduit.

Ce volet rotatif est limité à un seul sens d'ouverture/fermeture et ne peut donc se fermer avec étanchéité des deux côtés ou faces de celui-ci. De plus, l'assemblage du moyen d'obturation est fastidieux avec de nombreuses étapes telles que le positionnement de l'axe à travers le conduit, puis l'insertion du volet dans le conduit et dans l'axe, la mise en place du volet, en position de fermeture, en faisant tourner l'axe pour que la périphérie du volet épouse le conduit et réalise un auto centrage du volet, la fixation du volet sur l'axe dans la position trouvée, et le réglage de fuite pour que le volet n'endommage pas le conduit, au moyen d'une vis de réglage.

Cela étant, il est également connu des vannes permettant de disposer de deux positions de fermeture par demi-tour du volet. Dans de telles vannes, comme le volet est généralement vissé ou soudé sur l'axe de liaison dans l'une des positions fermées, le niveau de fuite sera bon (sans fuite) dans cette position mais restera mauvais (avec fuite) de l'autre côté, après rotation de 180°. Cela est dû principalement à un désaxage de l'axe de rotation par rapport à l'axe du conduit, désaxage difficilement évitable car provenant de la fabrication même des pièces. Celles-ci entraînent en effet un défaut de placement du passage de l'axe dans le corps et des défauts de coaxialité des paliers ou analogues de guidage de l'axe.

Ainsi, si l'étanchéité est atteinte lorsque le volet est en position de fermeture dans la position angulaire correspondant à celle où le volet a été monté sur l'axe, en revanche, l'étanchéité ne sera pas obtenue après une rotation de 180° en raison du désaxage apparaissant avec la rotation du volet. Plus précisément, ce désaxage entraînera une zone de fuite d'un côté du volet et une zone d'interférence du côté diamétralement opposé entre le volet et le conduit, risquant d'ailleurs de provoquer une défaillance du volet.

Le document FR 1.552.332. A divulgue une vanne de circulation de fluide comprenant toutes les caractéristiques du préambule de la revendication 1. La présente invention a pour but de remédier à ces inconvénients et concerne une vanne de circulation de fluide dont la conception permet, notamment, la fermeture en une seule position angulaire pour une rotation du moyen d'obturation de 360°, ceci avec un niveau de fuite optimal.

A cet effet, la vanne pour commander la circulation de fluide est du type comportant :
- un corps apte à être traversé par ledit fluide, et
- un moyen d'obturation commandable rotatif, disposé dans ledit corps et pouvant occuper, par rotation dudit moyen par rapport audit corps, différentes positions angulaires.

Selon l'invention, la vanne est remarquable par le fait que ledit corps comprend un logement interne cylindrique à section transversale circulaire, et que ledit moyen d'obturation commandable rotatif comporte au moins une partie d'obturation, notamment elliptique, agencée dans un plan incliné par rapport audit logement cylindrique et coopérant avec la paroi latérale dudit logement par une génératrice périphérique, de manière à assurer un contact étanche entre le moyen d'obturation et le corps en au moins une position angulaire.

Ainsi, grâce à l'invention, on obtient, en position de fermeture de la vanne, une étanchéité sur l'intégralité de la périphérie du volet, ceci sans utilisation de biseaux. La partie d'obturation pourra de plus tourner sur 360° et, en position de fermeture, assurera l'étanchéité avec la paroi latérale du logement grâce au contact continu entre eux, donné par l'inclinaison de la partie d'obturation avec la paroi du logement, ceci que ladite partie d'obturation tourne dans un sens ou dans l'autre. Il sera également possible, en fonction de la configuration de la vanne, de disposer de plusieurs positions de fermeture, par exemple deux positions écartées de 180°, étanches sur l'intégralité de la périphérie du volet.

Ladite partie inclinée du moyen d'obturation est conformée en un disque rotatif dont le bord périphérique constitue la génératrice de contact avec la paroi latérale du logement cylindrique, notamment de manière à assurer un contact cylindre sur cylindre. Ainsi, la projection du disque rotatif incliné, le long de l'axe rotation, dans le logement cylindrique est circulaire et le disque coopère parfaitement avec la paroi latérale de celui-ci de section correspondante. On remarque la simplicité de réalisation de la partie inclinée d'obturation qui permet en outre, comme dit précédemment, d'éviter les fuites en position de fermeture du disque.

La partie inclinée d'obturation forme, par exemple, un angle de sensiblement 45° avec l'axe du logement cylindrique du corps.

Avantageusement, ledit moyen d'obturation comporte une tige de commande qui est reliée à la partie inclinée pour l'entraîner en rotation et qui est disposée dans l'axe dudit logement cylindrique passant par le centre de ladite partie inclinée. Cette tige porte ainsi simplement en bout le disque, de sorte que cette réalisation du moyen d'obturation s'affranchit de l'axe s'étendant usuellement le long du volet et entraînant les difficultés d'assemblage et les risques de fuite et d'interférence liés au désaxage.

En effet, le volet n'est plus dans le plan de son arbre de rotation, ce qui réduit les interférences entre ces deux pièces. De plus, le volet, par sa symétrie, peut se monter indifféremment dans les deux sens sans avoir recours à un détrompage.

En particulier, ladite tige et ladite partie inclinée du moyen d'obturation peuvent être réalisées en une seule pièce, ou assemblées fixement l'une à l'autre par surmoulage, soudage, collage, élément de fixation, etc...

De préférence, du côté opposé à la partie inclinée d'obturation, la tige est montée dans un palier de guidage solidaire du corps et/ou est reliée, en sortie de celui-ci, à un dispositif d'entraînement en rotation.

Différents modes de réalisation de la vanne de commande incluant au moins une entrée et une sortie d'au moins un fluide traversant le logement du corps à moyen d'obturation rotatif, seront décrits ci-après en regard des figures annexées qui feront bien comprendre comment l'invention peut être réalisée. Sur ces figures, des références identiques désignent des éléments semblables.
La figure 1 est une vue extérieure en plan d'un premier mode de réalisation de la vanne de commande ne faisant pas partie de l'invention.
La figure 2 montre, en perspective, le corps de la vanne avec, dans ce premier mode de réalisation, une entrée et une sortie coaxiales pour la circulation du fluide.
La figure 3 montre en perspective le moyen d'obturation rotatif de la vanne.
La figure 4 représente, en perspective, en transparence, la vanne avec le moyen d'obturation monté dans le corps de la vanne et dans une position de fermeture de celle-ci.
Les figures 5 et 6 représentent, en perspective en transparence, la vanne avec le moyen d'obturation rotatif dans une position d'ouverture à +90° et -90°, respectivement.
Les figures 7 à 10 représentent respectivement, en coupe transversale, les positions du moyen d'obturation rotatif dans des positions d'ouverture de 90°, 45°, 5° et de fermeture de 0° ou 180°.
Les figures 11 et 12 montrent des graphiques représentant respectivement la zone de contact du disque du moyen d'obturation rotatif en position de fermeture et d'ouverture maximale, sur le logement du corps de ladite vanne ci-dessus, illustré à plat.
Les figures 13, 14 et 15 sont des vues schématiques en plan d'un deuxième mode de réalisation de la vanne conformément à l'invention autorisant une seule fermeture pour une rotation du moyen d'obturation de 360°.
Les figures 16 et 17 sont similaires aux figures 11 et 12, cette fois pour ladite vanne des figures 13 à 15.
La figure 18 est un graphique représentant la loi d'ouverture du disque de la vanne ci-dessus, c'est-à-dire la position du disque dans le logement en fonction de l'angle de rotation du moyen d'obturation.

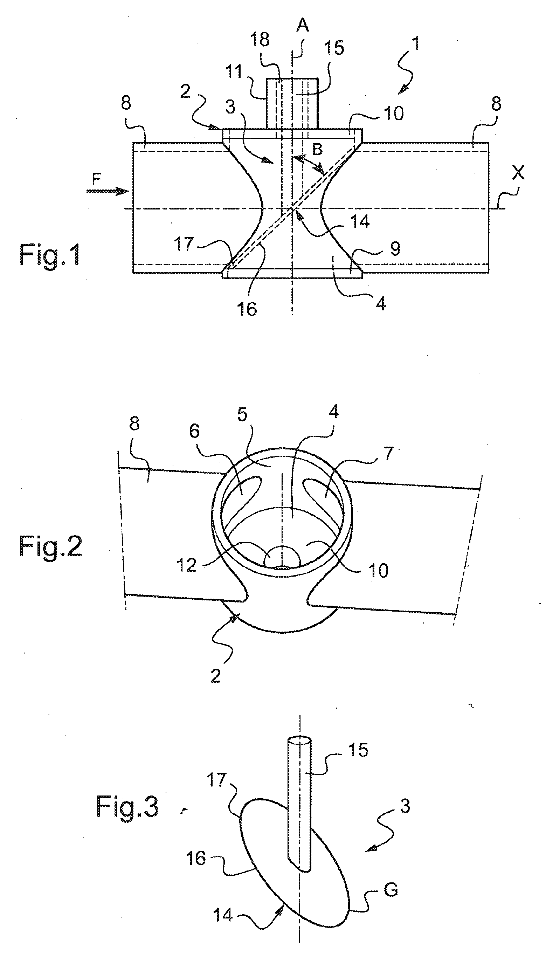

La vanne de commande 1 représentée sur les figures 1 à 3 selon un premier mode réalisation ne faisant pas partie de l'invention est, par exemple, destinée à assurer le dosage de l'air introduit dans la ligne d'admission d'un moteur Diesel, étant entendu qu'elle pourrait avoir tout autre fonction.

Elle comporte deux composants essentiels, à savoir un corps 2 (figure 2) et un moyen d'obturation 3 (figure 3). En particulier, le corps 2 de la vanne1 est muni d'un logement interne 4 qui est cylindrique d'axe A et de section circulaire et qui est délimité par une paroi latérale 5. Ce logement interne peut être assimilé à un alésage. Dans la paroi de celui-ci débouchent radialement à l'axe A, une entrée 6 et une sortie 7 formant deux voies pour le fluide destiné à circuler à travers le logement de la vanne. Ces entrée 6 et sortie 7 sont, par exemple, alignées l'une par rapport à l'autre. Elles présentent ici un axe longitudinal X coupant perpendiculairement l'axe A du logement 2, et ont des diamètres identiques. Elles se prolongent au-delà de la paroi latérale 5 du logement par des conduits 8 intégrés au corps 2 et destinés au raccordement avec le circuit (ligne) équipé de ladite vanne.

On voit par ailleurs, sur les figures 1, 2 et 4, que le logement cylindrique interne 4 est fermé totalement par un fond transversal 9 à l'une de ses extrémités, tandis qu'à son extrémité opposée, se trouve un couvercle transversal 10 se prolongeant par un embout 11 avec un trou axial 12. Celui-ci est traversé par le moyen d'obturation 3 qui coopère avec un dispositif d'entraînement non représenté, géré par une unité de commande connue en soi pour entraîner en rotation, autour de l'axe A, le moyen d'obturation 3.

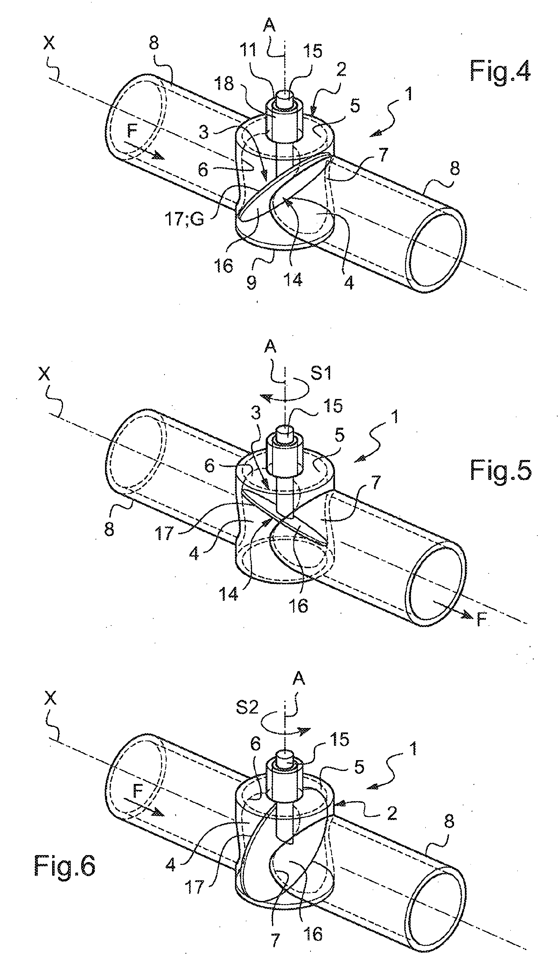

Comme on le voit mieux en regard des figures 3 et 4, ce dernier présente conformément à l'invention une partie inclinée d'obturation 14 et une tige de liaison 15. En particulier, la partie inclinée 14 est conformée en un volet elliptique 16 disposé dans un plan incliné par rapport à l'axe A du logement cylindrique circulaire 2 et centré sur ledit axe A, de façon que son bord périphérique 17 soit en contact constant avec la paroi latérale 5 du logement 4 de manière à isoler l'entrée 6 et la sortie 7 dans au moins une position angulaire donnée du moyen d'obturation pour interrompre la circulation du fluide, ou à mettre en communication fluidique l'entrée 6 et la sortie 7 avec un débit réglable selon l'ouverture angulaire donnée au volet d'obturation. Ce bord périphérique 17 constitue ainsi une génératrice G toujours en contact étanche avec la paroi latérale 5 du logement.

Par « incliné », on entend compris strictement entre 0° et 90°. Par « volet », on entend une pièce présentant deux surfaces inclinées par rapport à l'axe A et reliées par le bord périphérique 17. Lesdites surfaces inclinées sont éventuellement parallèles entre elles. La pièce présente une faible épaisseur, à savoir une distance comprise entre lesdites surfaces inclinées très inférieure au diamètre du corps 2, notamment dix fois inférieure. Il s'agit, par exemple, d'un disque.

Des considérations géométriques sont prises pour assurer le bon fonctionnement de la vanne 1. Le volet 16 à une forme elliptique de grand-axe supérieur au diamètre du logement circulaire 4 et de petit-axe sensiblement inférieur au diamètre du logement circulaire 4. Ici, le diamètre du logement circulaire 4 est en outre supérieur aux diamètres identiques des entrée 6 et sortie 7 de fluide. La tige de liaison 15 est agencée suivant l'axe A du logement, de sorte à être centrée sur le disque inclinée, avec l'angle B entre le plan incliné du disque et l'axe A égal ici à 45°. Pour avoir un contact constant avec la paroi latérale 5 du logement, le grand axe du disque 16 est donc sensiblement égal au diamètre du logement multiplié par √2. Ce contact peut être défini comme étant un contact cylindre/cylindre entre la paroi 5 de section circulaire du logement 4 et la génératrice G correspondant au bord périphérique 17 du disque 16 incliné et qui est circulaire en projection sur un plan perpendiculaire à l'axe de rotation du volet. Le petit-axe du volet 16 pourra être sensiblement supérieur au diamètre des entrée 6 et sortie 7 de fluide.

Par ailleurs, le montage du moyen d'obturation 3 dans le logement 4 du corps de la vanne ne nécessite aucune opération de réglage fastidieuse comme précédemment, seule une mise en butée axiale du moyen 3 dans le logement étant exigée pour centrer le disque 16 par rapport aux entrée et sortie de fluide.

La tige 15 est associée, par l'une de ses extrémités, au disque 16, par assemblage ou surmoulage, ou elle est formée avec le disque, de sorte à avoir un moyen d'obturation monobloc 3. A titre d'exemple, le disque 16 peut être en plastique et la tige 15 en métal ou inversement, ou les deux peuvent être en matière plastique ou en métal selon la réalisation monobloc ou composite choisie. L'autre extrémité de la tige traverse le trou axial 12 de l'embout 11 par l'intermédiaire d'un palier de guidage 18, et est reliée au dispositif d'entraînement en rotation non représenté.

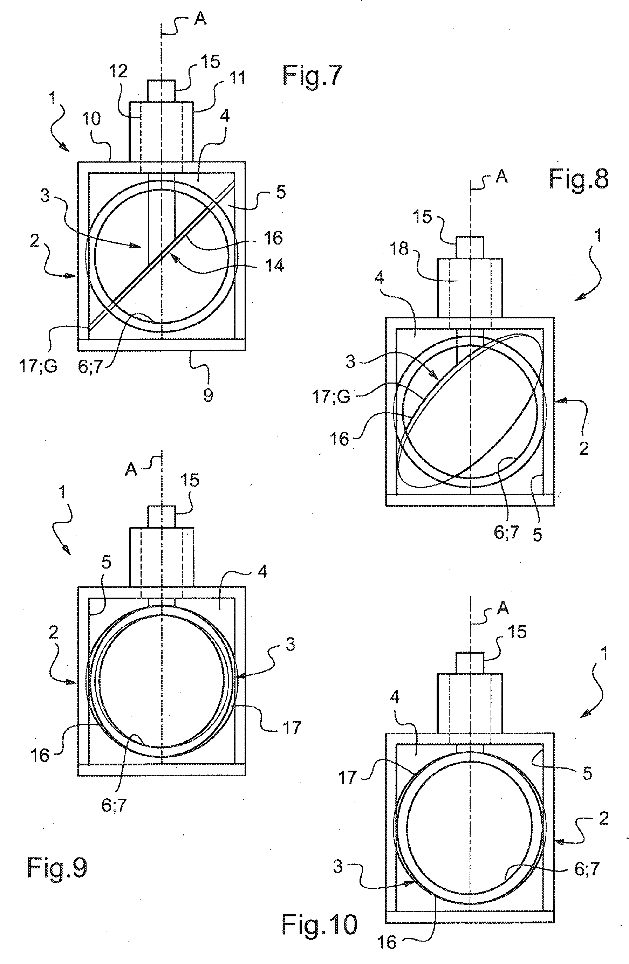

Dans la position illustrée en regard des figures 4 et 10 ne faisant pas partie de l'invention, le disque incliné 16 du moyen d'obturation 3 isole l'entrée 6 de la sortie 7, empêchant la circulation du fluide à travers la vanne 1. Pour cela, on voit que le bord périphérique 17 du disque incliné 16 coopère avec étanchéité et complètement avec la paroi latérale 5 du logement cylindrique 4, à la manière d'une cloison séparant le logement en deux chambres internes distinctes et étanches, chacune tournée vers l'une des voies d'entrée 6 et de sortie 7 de passage du fluide. Cette position angulaire du disque incliné 16 et donc du moyen d'obturation 3 correspond à une fermeture de la vanne 1 avec pour point d'origine, une rotation angulaire nulle de 0° du moyen d'obturation 3, le dispositif d'entraînement de celui-ci via la tige 15 étant inactif.

Lorsque le dispositif d'entraînement est sollicité, il provoque la rotation du moyen d'obturation 3 selon l'angle souhaité correspondant à un débit déterminé du fluide à travers la vanne 1. En regard des figures 5 et 7, le moyen d'obturation 3, via sa tige 15, a subi une rotation de +90° dans le sens horaire S1 autour de l'axe A, si bien que le disque incliné 16 a tourné dans le logement 4 pour se trouver dans un plan sensiblement parallèle aux conduits coaxiaux 8 délimitant l'entrée 6 et la sortie 7 du corps 2 de la vanne. Par suite de la rotation, le bord périphérique 17 n'est plus en contact total avec la paroi latérale 5 du logement, mais seulement partiel puisque des parties opposées du bord 17 se trouvent en regard des entrée et sortie circulaires 6 et 7. Cette position angulaire effacée du disque permet le passage du fluide entre l'entrée 6 et la sortie 7 via le logement interne étanche 4 du corps, et correspond à une pleine ouverture de la vanne 1 pour laquelle le débit de circulation du fluide est maximal.

La position occupée par le disque incliné 16 et représentée en regard de la figure 6 est symétrique de la précédente, c'est-à-dire que le moyen d'obturation a tourné, sous l'action du dispositif d'entraînement, de -90° dans le sens anti-horaire S2 par rapport à la position de fermeture de 0°. Ainsi, le disque incliné 16 se trouve parallèle aux entrée 6 et sortie 7 coaxiales du fluide assurant un débit maximal à travers la vanne. On peut ainsi faire fonctionner la vanne 1 dans les deux sens depuis une position de fermeture centrale.

Une position intermédiaire du moyen d'obturation 3 est illustrée à titre d'exemple en regard de la figure 8, laquelle position correspond à une rotation de +45° du disque incliné 16 autour de l'axe A. Le bord 17 du disque est alors en partie en regard de l'entrée 6 et de la sortie 7, mettant en communication celles-ci pour le passage du fluide sous un débit moyen.

Quant à la figure 9, elle montre que le bord 17 du disque incliné 16 est en totalité en contact avec la paroi latérale 5 du logement lorsque le moyen d'obturation se trouve à environ 5° de la position de fermeture initiale de 0°. Cela signifie que le recouvrement total du disque 16 et du logement 4 permet d'accepter un défaut angulaire lors de l'assemblage sans diminuer le niveau d'étanchéité de la vanne. La fermeture de la vanne est finalement acquise sur une plage angulaire d'environ 10° (+ ou -5°).

On remarque aussi que, grâce à la conception du disque incliné dans un logement cylindrique avec contact cylindre-cylindre, la position de fermeture de la vanne peut être atteinte soit par le retour du moyen d'obturation 3, sous une rotation inverse de 90°, de la position à pleine ouverture vers la position de fermeture, soit en effectuant une rotation supplémentaire de 90° pour amener le disque en position de fermeture. Dans ce dernier cas, le disque incliné 16 a pivoté de 180°. Il peut ainsi être avantageusement utilisé indifféremment des deux côtés du fait que seul son bord périphérique fait contact avec la paroi latérale du logement. Le disque a donc deux positions de fermeture pour une rotation de 360°.

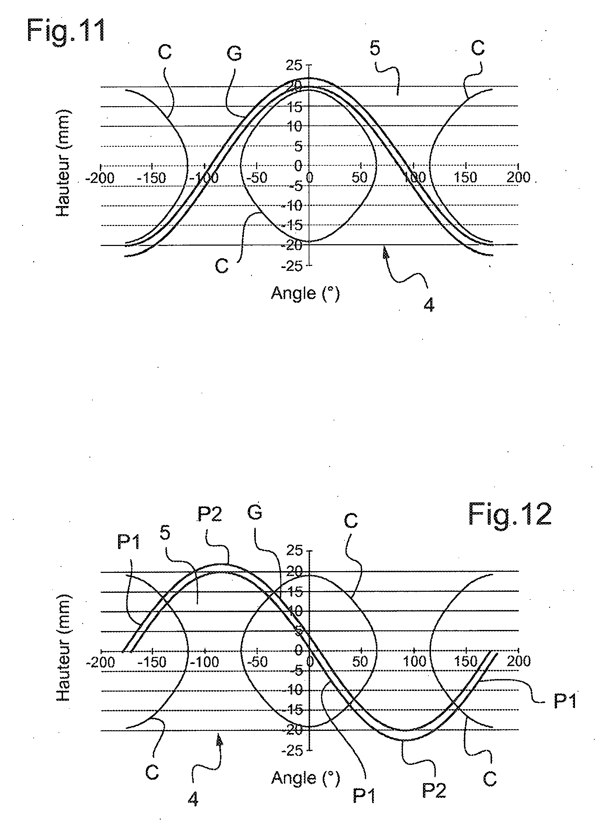

Les graphiques des figures 11 et 12 mettent bien en évidence la position du disque incliné 16 selon la hauteur (mm) de la paroi latérale 5 du logement, laquelle paroi de 360° est développée de -180° à +180° pour être représentée en plan.

Sur la figure 11, le disque incliné 16 du moyen d'obturation 3 occupe la position de fermeture de la vanne 1 (figures 4 et 10), c'est-à-dire avec une rotation nulle dudit moyen. Par rapport à l'entrée 6 et à la sortie 7 de diamètres identiques et inférieurs à celui du logement, et illustrées par le contour C des conduits 8 les délimitant, on voit bien que le bord périphérique 17 formant la génératrice G du disque, représentée en plan selon une sinusoïde, est constamment en contact avec la paroi latérale 5 du logement. De la sorte, la fermeture de la vanne est totale, l'entrée 6 et la sortie 7 étant parfaitement isolées l'une de l'autre, ce qui interdit toute circulation du fluide à travers la vanne 1.

En regard de la figure 12, le disque incliné 16 occupe la position de pleine ouverture de la vanne (figures 5, 6 et 7), c'est-à-dire avec une rotation de 90° du moyen d'obturation 3. Dans ce cas, on voit bien que le bord périphérique 17 sous forme de sinusoïde (décalée de π/2 par rapport à la figure 11) passe alors en grande partie (référence P1) par les entrée et sortie 6 et 7, au milieu de celles-ci. Seule l'autre partie (référence P2) du bord 17 reste au contact de la paroi latérale 5 du logement, ce qui montre bien la pleine ouverture de la vanne 1 pour un débit de fluide maximum, à travers elle.

Une telle vanne assure par conséquent l'étanchéité dans les deux sens de fermeture par l'adaptation du disque incliné dans le logement circulaire (contact cylindre-cylindre), lequel disque, par sa symétrie, peut se monter indifféremment dans les deux sens sans détrompage dans le corps de la vanne. En outre, comme le bord du disque se déplace linéairement sur la paroi cylindrique, cela permet d'éviter l'encrassement entre le disque et la paroi et d'assurer un auto-nettoyage de la vanne, ce qui est bénéfique lorsque celle-ci est une vanne EGR.

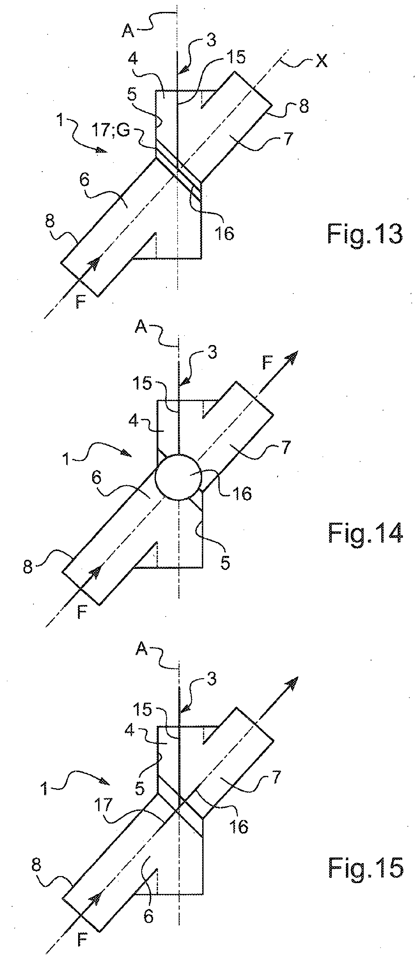

Dans le deuxième mode de réalisation correspondant à l'invention et illustré schématiquement sur les figures 13 à 15, la vanne de commande 1 est conçue pour ne proposer qu'une seule fermeture par rotation de 360° du moyen d'obturation (au lieu de deux dans le mode précédent). Pour cela, si le moyen d'obturation 3 et le logement cylindrique 4 d'axe A du corps 2 restent identiques, en revanche, les entrée 6 et sortie 7 sont agencées différemment, en ce sens qu'elles ne sont plus alignées perpendiculairement à l'axe A, mais qu'elles sont alignées en biais par rapport à l'axe A du logement. Plus particulièrement, l'axe X des deux conduits 8 délimitant les entrée et sortie 6, 7 est perpendiculaire au plan du disque 16 incliné lorsque celui-ci occupe la position de fermeture de la vanne, c'est-à-dire qu'il forme un angle de 135° avec l'axe A du logement.

Ainsi, l'intersection des entrée et sortie circulaires 6, 7 avec la paroi latérale 5 du corps donne des contours de communication C1 plus allongés, sensiblement elliptiques, de sorte à obtenir une loi d'écoulement spécifique sur une rotation de 360° de la tige du moyen d'obturation.

Sur la figure 13, le bord périphérique 17 (génératrice G) du disque incliné est complètement au contact de la paroi latérale 5 du logement, correspondant donc à la position de fermeture de la vanne. Par suite de la rotation de la tige 15 du moyen d'entraînement 3, le disque incliné 16 tourne pour prendre progressivement une position d'ouverture après une rotation de 90°, figure 14, jusqu'à une position de pleine ouverture après une rotation de 180°, figure 15. Le plan du disque est alors parallèle aux entrée et sortie coaxiales 6, 7 et le bord périphérique 17 de celui-ci n'est plus que partiellement au contact de la paroi latérale 5 du logement 4.

On comprend donc qu'en poursuivant la rotation du moyen d'obturation 3, le disque va diminuer la section ouverte des entrée et sortie et donc le passage du fluide, jusqu'à interrompre celui-ci après une rotation de 360°.

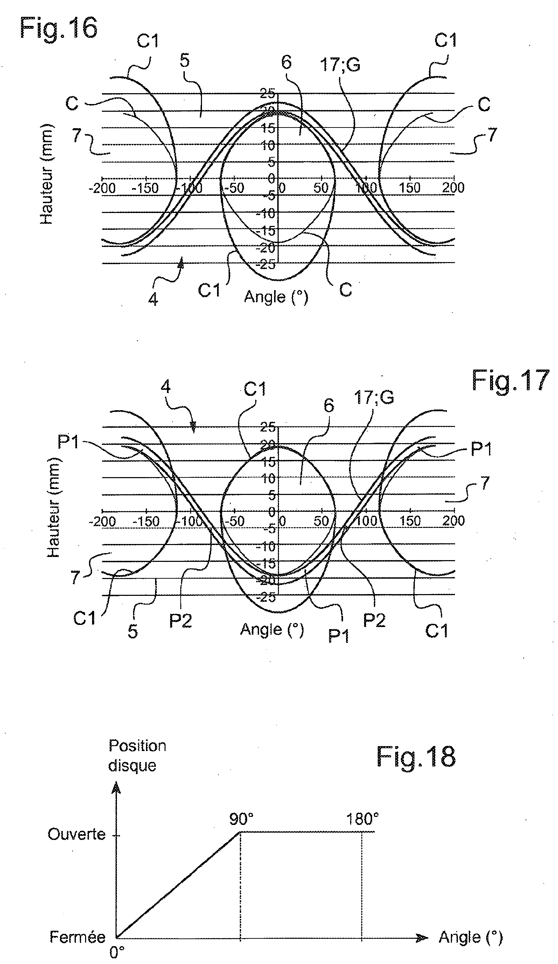

Comme on le voit sur les graphiques des figures 16 et 17, de définition analogue aux graphiques des figures 11 et 12, lorsque la vanne 1 est en position de fermeture pour une rotation nulle (0°) du moyen d'obturation, la totalité de la périphérie du bord 17 du disque incliné 16 est au contact de la paroi latérale 5 du logement (contact cylindre/cylindre entre la paroi et la génératrice du disque).

On a par ailleurs représenté les contours C du premier mode et ceux C1 du deuxième mode, laquelle comparaison entre les deux contours montre une section de passage de fluide pouvant être plus importante avec les contours C1. Cela est notamment représentatif sur le graphique de la figure 15 où le disque 16 a subi une rotation de 180° avec le plan de ce dernier parallèle à l'axe X des conduits 8 d'entrée 6 et de sortie 7 pour la pleine ouverture de la vanne 1. Le bord 17 du disque incliné est, comme précédemment, davantage en regard de l'entrée 6 et de la sortie 7 (partie P1 du bord) qu'il n'est au contact de la paroi latérale du logement (partie P2).

La loi d'ouverture du disque dans ce deuxième mode de réalisation de la vanne correspondant à l'invention est montrée sur la figure 18 et représente la position du disque en fonction de l'angle de rotation compris entre 0° et 180°. Le symétrique du tracé par rapport à l'axe des ordonnées (0° à -180°) n'est pas représenté. On voit que la position de fermeture de cette vanne n'est obtenue qu'une seule fois à 0°, puis croît linéairement vers une position d'ouverture jusqu'à 90° pour être en position de pleine ouverture sensiblement de 90° à 180°.

## Revendications

1. Vanne pour commander la circulation d'un fluide, du type comportant un corps (2) apte à être traversé par ledit fluide, et un moyen d'obturation commandable rotatif (3), disposé dans ledit corps et pouvant occuper, par rotation dudit moyen par rapport audit corps, différentes positions angulaires, le corps (2) comprenant un logement interne cylindrique (4) à section transversale circulaire, le moyen d'obturation commandable rotatif (3) comportant au moins une partie d'obturation (14) agencée dans un plan incliné par rapport audit logement cylindrique (4) et coopérant avec la paroi latérale (5) dudit logement par une génératrice périphérique de manière à assurer un contact étanche entre le moyen d'obturation (3) et lé corps (2) en une position angulaire, vanne dans laquelle sont ménagées, dans ledit corps (2), une entrée (6) et une sortie (7) pour ledit fluide lesquelles sont coaxiales et débouchent sensiblement en biais par rapport audit logement cylindrique interne (4) avec le moyen d'obturation (3) les séparant en l'une de ses positions angulaires, **caractérisée en ce que** ladite partie inclinée (14) du moyen d'obturation (3) est conformée en un disque rotatif (16) dont le bord périphérique (17) constitue la génératrice de contact avec la paroi latérale (5) du logement cylindrique, de manière à assurer un contact cylindre sur cylindre.

2. Vanne selon la revendication 1, dans laquelle la partie inclinée d'obturation (14) forme un angle de sensiblement 45° avec l'axe (A) du logement cylindrique (4) du corps.

3. Vanne selon l'une des revendications 1 à 2, dans laquelle ledit moyen d'obturation (3) comporte une tige de commande (15) qui est reliée à la partie inclinée (14) pour l'entraîner en rotation et qui est disposée dans l'axe dudit logement cylindrique (4) passant par le centre de ladite partie inclinée.

4. Vanne selon la revendication précédente, dans laquelle ladite tige (15) et ladite partie inclinée (14) sont réalisées en une seule pièce.

5. Vanne selon l'une des revendications 3 ou 4, dans laquelle, du côté opposé à la partie inclinée d'obturation, la tige (15) est montée dans un palier de guidage (18) solidaire du corps et/ou est reliée, en sortie de celui-ci, à un moyen d'entraînement en rotation.

## Patentansprüche

1. Ventil zum Steuern des Stroms einer Flüssigkeit des Typs umfassend einen Körper (2), der geeignet ist, von der Flüssigkeit durchquert zu werden, und ein drehbares, steuerbares Verschlussmittel (3), das in dem Körper angeordnet ist und durch Drehung des Mittels relativ zu dem Körper verschiedene Winkelpositionen einnehmen kann, wobei der Körper (2) ein zylindrisches Innengehäuse (4) mit kreisförmigem Querschnitt aufweist, wobei das drehbare, steuerbare Verschlussmittel (3) mindestens einen Verschlussteil (14) aufweist, der in einer Ebene angeordnet ist, die relativ zu dem zylindrischen Gehäuse (4) geneigt ist, und mit der Seitenwand (5) des Gehäuses durch eine Umfangskante derart zusammenwirkt, um einen dichten Kontakt zwischen dem Verschlussmittel (3) und dem Körper (2) in einer Winkelposition zu gewährleisten, Ventil, in dem in dem Körper (2) ein Einlass (6) und ein Auslass (7) für die Flüssigkeit gebildet sind, die koaxial sind und im Wesentlichen schräg zu dem zylindrischen Innengehäuse (4) mit dem Verschlussmittel (3), das sie in einer seiner Winkelpositionen trennt, münden, **dadurch gekennzeichnet, dass** der geneigte Teil (14) des Verschlussmittels (3) als drehbare Scheibe (16) ausgebildet ist, deren Umfangsrand (17) die Kontaktkante mit der Seitenwand (5) des zylindrischen Gehäuses derart bildet, um einen Zylinder auf Zylinder Kontakt zu gewährleisten.

2. Ventil nach Anspruch 1, wobei der geneigte Verschlussteil (14) einen Winkel von im Wesentlichen 45° mit der Achse (A) des zylindrischen Gehäuses (4) des Körpers bildet.

3. Ventil nach einem der Ansprüche 1 bis 2, wobei das Verschlussmittel (3) eine Steuerstange (15) aufweist, die mit dem geneigten Teil (14) verbunden ist, um ihn in Drehung zu versetzen, und die in der Achse des zylindrischen Gehäuses (4) angeordnet ist, die durch die Mitte des geneigten Teils verläuft.

4. Ventil nach dem vorhergehenden Anspruch, wobei die Stange (15) und der geneigte Teil (14) aus einem einzigen Stück erstellt sind.

5. Ventil nach einem der Ansprüche 3 oder 4, wobei die Stange (15) auf der Seite, die dem geneigten Verschlussteil gegenüberliegt, in einem Führungslager (18) befestigt ist, das mit dem Körper fest verbunden ist und/oder am Ausgang von diesem mit einem Mittel zum in Drehung Versetzen verbunden ist.

## Claims

1. Valve for controlling the flow of a fluid of the type comprising a member (2) which is capable of allowing the passage of the fluid and a controllable rotary closure means (3) which is arranged in the member and which can occupy, as a result of rotation of the means relative to the member, different angular positions, the member (2) comprising a cylindrical internal housing (4) which has a circular cross-section, the controllable rotary closure means (3) comprising at least one closure portion (14) which is arranged in an inclined plane relative to the cylindrical housing (4) and which cooperates with the side wall (5) of the housing by means of a peripheral generatrix so as to ensure sealing contact between the closure means (3) and the member (2) in an angular position, in which valve there are arranged in the member (2) an inlet (6) and an outlet (7) for the fluid, which are coaxial and open substantially in an oblique manner relative to the internal cylindrical housing (4) with the closure means (3) separating them in one of the angular positions thereof, **characterized in that** said inclined portion (14) of the closure means (3) is formed as a rotary disk (16) whose peripheral edge (17) constitutes the contact generatrix with the side wall (5) of the cylindrical housing so as to ensure cylinder-on-cylinder contact.

2. Valve according to Claim 1, wherein the inclined closure portion (14) forms an angle of substantially 45° with the axis (A) of the cylindrical housing (4) of the member.

3. Valve according to either of Claims 1 and 2, wherein the closure means (3) comprises a control rod (15) which is connected to the inclined portion (14) in order to drive it in rotation and which is arranged in the axis of the cylindrical housing (4) which extends through the center of the inclined portion.

4. Valve according to the preceding claim, wherein the rod (15) and the inclined portion (14) are produced in one piece.

5. Valve according to either of Claims 3 and 4, wherein, at the side opposite the inclined closure portion, the rod (15) is mounted in a guiding bearing (18) which is fixedly joined to the member and/or is connected at the outlet thereof to a rotational driving means.
